# EUROPEAN PATENT APPLICATION

(11) **EP 4 422 272 A1**
(43) Date of publication of application: **28.08.2024**
(21) Application number: 22889343.4
(22) Date of filing: 03.11.2022
(51) Int. Cl.: H04W 36/00

(54) **COMMUNICATION METHOD AND APPARATUS**

(30) Priority: 04.11.2021 CN 202111299709
(71) Applicant: Huawei Technologies Co., Ltd., Shenzhen, Guangdong 518129 (CN)
(72) Inventor: XU, Xiaoying, Shenzhen, Guangdong 518129 (CN)
(74) Representative: Gill Jennings & Every LLP
(86) International application number: PCT/CN2022/129427
(87) International publication number: WO 2023/078321

(57) **Abstract**

This application discloses a communication method. The communication method includes: First UE receives a first message from a first access network device, where the first message is used by the first UE to perform RRC reconfiguration, the first message includes a network coding NC configuration parameter, the NC configuration parameter includes first indication information, and the first indication information indicates the terminal first UE to perform an NC operation with a second access network device; and the first UE separately performs NC operations on a first coded packet and a second coded packet based on the first message, where the first coded packet is a coded packet generated or received by the first access network device, and the second coded packet is a coded packet generated or received by the second access network device. In this way, it is ensured that the first UE still performs real-time service transmission in a handover process, and delay and reliability requirements are ensured in the handover process.

## Description

This application claims priority to Chinese Patent Application No. 202111299709.2, filed with the China National Intellectual Property Administration on November 4, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In the 3rd generation partnership project (3rd generation partnership project, 3GPP), a service model and a quality of service (quality of service, QoS) requirement of real-time video transmission have a high requirement on transmission performance, for example, a delay requirement and a reliability requirement. A real-time service is, for example, a virtual reality (virtual reality, VR) service, an augmented reality (augmented reality, AR) service, or a mixed reality (mixed reality, MR) service, to ensure user experience.

In a conventional technology, reliability of service transmission is improved by introducing a network coding function to an access network device and adding redundancy coding. For example, network coding is performed at a packet data convergence protocol (packet data convergence protocol, PDCP) layer, network coding is performed at a radio link control (radio link control, RLC) layer, or network coding is performed by introducing a new protocol layer between the PDCP layer and the RLC layer of the access network device. A receiving end may restore an unsuccessfully received original data packet by using a redundant packet sent by the access network device and a successfully received original data packet, so that all data packets sent by the access network device can be completely received. This ensures smooth service transmission.

In a 5th generation (5th Generation, 5G) mobile communication system, when user equipment (UE) is located outside network coverage or a communication signal between the user equipment and an access network (access network, AN)/radio access network (radio access network, RAN) is poor, the UE triggers a handover procedure, and moves to another cell, to implement communication with a network side.

Currently, the UE still performs real-time service transmission in a handover process. How to ensure delay and reliability requirements in the handover process becomes a problem that needs to be urgently resolved in the industry.

### SUMMARY

This application provides a communication method and apparatus, to ensure delay and reliability requirements in service transmission in a UE handover process, and improve user experience.

According to a first aspect, a communication method is provided. The method includes: First UE receives a first message from a first access network device, where the first message is used by the first UE to perform RRC reconfiguration, the first message includes a network coding (network coding, NC) NC configuration parameter, the NC configuration parameter includes first indication information, and the first indication information indicates the first UE to perform an NC operation with a second access network device; and the first UE separately performs NC operations on a first coded packet and a second coded packet based on the first message, where the first coded packet is a coded packet generated or received by the first access network device, and the second coded packet is a coded packet generated or received by the second access network device.

According to the solution provided in this application, after receiving a handover acknowledgment message sent by the second access network device, the first access network device includes the first indication information in a radio resource control (Radio Resource Control, RRC) RRC reconfiguration message, and sends the RRC reconfiguration message (where specifically, the RRC reconfiguration message includes the NC configuration parameter, and the NC configuration parameter includes the first indication information), so that the first UE and the second access network device continue to perform an NC operation based on the first indication information, and the first UE implements NC processing on coded packets of the first access network device and the second access network device by using independent NC entities, so that real-time service transmission can be performed in a handover process of the first UE, and delay and reliability requirements are ensured.

In an implementation, the first message includes the NC configuration parameter and a data radio bearer (data radio bearer, DRB) DRB ID, and the NC configuration parameter includes: a configuration redundancy ratio, a coded packet size, a coding type, the first indication information, and the like.

With reference to the first aspect, in some implementations of the first aspect, the method further includes: The NC configuration parameter further includes second indication information, and the second indication information includes indicating the second access network device to perform an NC entity reset operation.

In this application, resetting an NC entity may be understood as resetting a state variable of a coded packet.

In an implementation, the second access network device establishes an NC entity based on the NC configuration parameter, and the second access network device indicates, based on the first indication information, the established NC entity to continue to perform an NC operation.

In an implementation, the first UE establishes, based on the NC configuration parameter, a second NC entity associated with the second access network device; and the first UE submits, based on the first indication information, the second coded packet from the second access network device to the second NC entity to perform an NC operation.

In an implementation, the first UE submits the first coded packet from the first access network device to a first NC entity associated with the first access network device to perform an NC operation.

In an implementation, the first access network device may further send the first coded packet to the second access network device. In this case, the first UE receives third indication information from the second access network device, where the third indication information indicates to submit the first coded packet from the second access network device to a first NC entity associated with the first access network device to perform an NC operation, and perform decompression processing by using a security function and/or an internet protocol (internet protocol, IP) IP header associated with the first access network device; or the first UE receives fourth indication information from the second access network device, where the fourth indication information indicates to submit the second coded packet from the second access network device to the second NC entity associated with the second access network device to perform an NC operation, and perform decompression processing by using a security function and/or an IP header associated with the second access network device.

In an implementation, the third indication information and the fourth indication information are an indication field in the first coded packet and an indication field in the second coded packet respectively, and the indication field being the third indication information is different from the indication field being the fourth indication information.

For example, the third indication information is an indication field whose value is 1, and the indication field whose value is 1 is in the first coded packet.

Similarly, the fourth indication information may be an indication field whose value is 0, and the indication field whose value is 0 is in the second coded packet.

In an implementation, the third indication information or the fourth indication information may be set by the first access network device.

In another implementation, the third indication information or the fourth indication information may alternatively be set by the second access network device.

According to a second aspect, a communication method is provided. The method includes: A first access network device sends a first message, where the first message is used by first UE to perform RRC reconfiguration, the first message includes a network coding NC configuration parameter, the NC configuration parameter includes first indication information, and the first indication information indicates the first UE to perform an NC operation with a second access network device; and the first access network device sends a first data packet to the second access network device, where the first data packet is used by the second access network device to perform an NC operation based on the first indication information to generate a second coded packet.

According to the solution provided in this application, after the first access network device receives a handover acknowledgment message sent by the second access network device, the first access network device includes the first indication information when the first network device sends the RRC reconfiguration message (where specifically, the RRC reconfiguration message includes the NC configuration parameter, and the NC configuration parameter includes the first indication information), so that the first UE and the second access network device continue to perform an NC operation based on the first indication information. This enables the first UE to separately process coded packets of the first access network device and the second access network device, so that real-time service transmission can be performed in a handover process of the first UE, and delay and reliability requirements are ensured.

In an implementation, the first message includes an NC configuration parameter and a DRB ID, and the NC configuration parameter includes: a configuration redundancy ratio, a coded packet size, a coding type, first indication information, and the like.

With reference to the second aspect, in some implementations of the second aspect, the method further includes: The NC configuration parameter includes second indication information, and the second indication information indicates the second access network device to perform an NC entity reset operation.

In this application, resetting the NC entity may be understood as resetting a state variable of a coded packet.

With reference to the second aspect, in some implementations of the second aspect, the method further includes: The first access network device sends a first coded packet to the first UE, where the first coded packet is a coded packet generated or received by the first access network device.

With reference to the second aspect, in some implementations of the second aspect, the method further includes: The first access network device sends the first coded packet to the second access network device.

In an implementation, the first access network device sends third indication information to the second access network device, where the third indication information indicates the first UE to submit the first coded packet from the second access network device to a first NC entity associated with the first access network device to perform an NC operation, and perform decompression processing by using a security function and/or an IP header associated with the first access network device; or the first access network device sends fourth indication information to the second access network device, where the fourth indication information indicates to submit the second coded packet from the second access network device to a second NC entity associated with the second access network device to perform an NC operation, and perform decompression processing by using a security function and/or an IP header associated with the second access network device.

In an implementation, the third indication information and the fourth indication information are an indication field in the first coded packet and an indication field in the second coded packet respectively, and the indication field being the third indication information is different from the indication field being the fourth indication information.

For example, the third indication information is an indication field whose value is 1, and the indication field whose value is 1 is in the first coded packet.

Similarly, the fourth indication information may be an indication field whose value is 0, and the indication field whose value is 0 is in the second coded packet.

In an implementation, the third indication information or the fourth indication information may be set by the first access network device.

In another implementation, the third indication information or the fourth indication information may alternatively be set by the second access network device.

According to a third aspect, a communication method is provided. The method includes: First UE receives a first message from a first access network device, where the first message is used by the first UE to perform RRC reconfiguration, the first message includes a coding NC configuration parameter, the NC configuration parameter includes first indication information, and the first indication information indicates the first UE to perform an NC operation with a second access network device; and the first UE performs NC operations on a first coded packet and a second coded packet based on the first message, submitting the first coded packet to a security function and/or an IP header associated with the first access network device for decompression processing, and submitting the second coded packet to a security function and/or an IP header associated with the second access network device for decompression processing.

According to the solution provided in this application, after the first access network device receives the handover acknowledgment message sent by the second access network device, the first access network device includes the first indication information when the first access network device sends the RRC reconfiguration message (where specifically, the RRC reconfiguration message includes the NC configuration parameter, and the NC configuration parameter includes the first indication information), so that the first UE and the second access network device continue to perform an NC operation based on the first indication information, and the first UE can perform joint decoding and independent decompression on coded packets of the first access network device and the second access network device by using a common NC entity, so that real-time service transmission can be performed in a handover process of the first UE, and delay and reliability requirements are ensured.

In an implementation, the first UE performs an NC operation on the first coded packet based on fifth indication information, and then submits the first coded packet to a security function and/or an IP header associated with the first access network device for decompression processing.

It should be noted that the first UE processes the first coded packet by using a common NC entity.

In an implementation, the fifth indication information may be an indication field in the first coded packet.

In an implementation, the first coded packet is obtained by the second access network device by performing coding based on a first coded data packet and a first coding identifier, where the first coding identifier is a coding group number allocated by the first access network device to the first coded data packet, and the first coded data packet is a coded data packet that is submitted by the first access network device to an NC entity and that is sent to the second access network device.

It may be understood that the first coded data packet may be a coded service data unit (NC service data unit, NC SDU) NC SDU, and the first coding identifier may be an NC group number.

In another implementation, the first coded packet is a coded packet that is obtained by the first access network device by performing a coding operation and that is sent to the second access network device. In an implementation, the first UE performs an NC operation on the second coded packet based on sixth indication information, and then submits the second coded packet to a security function and/or an IP header associated with the second access network device for decompression processing.

It should be noted that the first UE processes the second coded packet by using the common NC entity.

In an implementation, the sixth indication information may be an indication field in the second coded packet.

In an implementation, the second coded packet is obtained by the second access network device by performing coding after the second access network device performs IP header compression and/or key encryption on the first coded data packet, where the first coded data packet is a coded data packet sent by the first access network device to the second access network device.

It may be understood that the first coded data packet may be a packet data convergence protocol service data unit (Packet Data Convergence Protocol service data unit, PDCP SDU) PDCP SDU.

In this application, the first coded packet and the second coded packet belong to a same coding group, and group numbers of the same coding group are consecutive.

In an implementation, the NC configuration parameter includes second indication information, and the second indication information includes indicating the second access network device to continue an NC entity reset operation.

According to a fourth aspect, a communication method is provided. The method includes: A first access network device sends a first message, where the first message is used by first UE to perform RRC reconfiguration, the first message includes a coding NC configuration parameter, the NC configuration parameter includes first indication information, and the first indication information indicates the first UE to perform an NC operation with a second access network device; and the first access network device sends a first coded data packet or a first coded packet to a second access network device, where the first coded data packet or the first coded packet is used by the second access network device to perform an NC operation to generate the first coded packet or a second coded packet, and the first coded data packet is a coded data packet submitted by the first access network device to an NC entity.

According to the solution provided in this application, after the first access network device receives the handover acknowledgment message sent by the second access network device, the first access network device includes the first indication information when the first access network device sends the RRC reconfiguration message (where specifically, the RRC reconfiguration message includes the NC configuration parameter, and the NC configuration parameter includes the first indication information), so that the first UE and the second access network device continue to perform an NC operation based on the first indication information, and the first UE can perform joint decoding and independent decompression on coded packets of the first access network device and the second access network device by using a common NC entity, so that real-time service transmission can be performed in a handover process of the first UE, and delay and reliability requirement are ensured.

In an implementation, the first access network device performs an NC operation based on the first coded data packet to generate the first coded packet, and the first access network device sends the first coded packet to the second access network device.

In an implementation, the first access network device sends a first coding identifier of the first coded data packet to the second access network device, and the first coding identifier is used by the second access network device to generate the first coded packet based on the first coded data packet, where the first coding identifier is a coding group number allocated by the first access network device to the first coded data packet.

In an implementation, the first coded packet includes fifth indication information, and the fifth indication information indicates the first UE to perform an NC operation on the first coded packet, and then submit the first coded packet to a security function and/or an IP header associated with the first access network device for decompression processing.

It should be noted that the first UE processes the first coded packet by using a common NC entity.

In an implementation, the fifth indication information may be an indication field in the first coded packet.

In an implementation, the second coded packet includes sixth indication information, and the sixth indication information indicates the first UE to perform an NC operation on the second coded packet, and then submit the second coded packet to a security function and/or an IP header associated with the second access network device for decompression processing.

It should be noted that the first UE processes the second coded packet by using a common NC entity.

In an implementation, the sixth indication information may be an indication field in the second coded packet.

In an implementation, the first coded packet and the second coded packet belong to a same coding group, and group numbers of the same coding group are consecutive.

In an implementation, the NC configuration parameter includes second indication information, and the second indication information includes indicating the second access network device to continue an NC entity reset operation.

According to a fifth aspect, a communication apparatus is provided, and the communication apparatus is a unit that performs the method in the first aspect, the second aspect, the third aspect, the fourth aspect, or the implementations of the first aspect, the second aspect, the third aspect, or the fourth aspect.

According to a sixth aspect, a communication apparatus is provided, including a processor and a memory. The memory is configured to store a computer program, and the processor is configured to invoke the computer program from the memory and run the computer program, so that the communication device performs the communication method in the first aspect, the second aspect, the third aspect, the fourth aspect, or the possible implementations of the first aspect, the second aspect, the third aspect, or the fourth aspect.

Optionally, there are one or more processors, and there are one or more memories.

Optionally, the memory may be integrated with the processor, or the memory and the processor are separately disposed.

According to a seventh aspect, a computer-readable storage medium is provided, where the computer-readable medium stores program code to be executed by a device, and the program code includes the method in the first aspect, the second aspect, the third aspect, or the fourth aspect.

According to an eighth aspect, a computer program product including instructions is provided. When the computer program product runs on a computer, the computer is enabled to perform the method in any implementation of the first aspect.

According to a ninth aspect, a chip is provided, where the chip includes a processor and a data interface, and the processor reads, by using the data interface, instructions stored in a memory, to perform the method in any implementation of the foregoing aspects.

Optionally, in an implementation, the chip may further include a memory, the memory stores instructions, the processor is configured to execute the instructions stored in the memory, and when the instructions are executed, the processor is configured to perform the method in any implementation of the foregoing aspects.

The chip may be specifically a field programmable gate array (field programmable gate array, FPGA) or an application-specific integrated circuit (application-specific integrated circuit, ASIC).

### BRIEF DESCRIPTION OF DRAWINGS

FIG. 1 is a schematic of a communication system architecture 100 to which an embodiment of this application is applicable;
FIG. 2 is a schematic of a network architecture 200 of a communication system to which an embodiment of this application is applicable;
FIG. 3 is an interaction diagram of a communication method in a conventional handover procedure to which an embodiment of this application is applicable;
FIG. 4 is an interaction diagram of a communication method in a non-conventional handover procedure to which an embodiment of this application is applicable;
FIG. 5 is a schematic block diagram of a communication method to which an embodiment of this application is applicable;
FIG. 6 is a schematic of a structure of a network coded packet sending method to which an embodiment of this application is applicable;
FIG. 7 is another schematic of a structure of a network coded packet sending method to which an embodiment of this application is applicable;
FIG. 8 is another schematic of a structure of a network coded packet sending method to which an embodiment of this application is applicable;
FIG. 9 is another schematic of a structure of a network coded packet sending method to which an embodiment of this application is applicable;
FIG. 10 is a schematic of a structure of a communication apparatus according to an embodiment of this application; and
FIG. 11 is a schematic block diagram of a communication apparatus according to an embodiment of this application.

### DESCRIPTION OF EMBODIMENTS

The following describes the technical solutions of this application with reference to the accompanying drawings.

A wireless communication system mentioned in embodiments of this application includes but is not limited to: a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interconnection microwave access (Worldwide Interoperability for Microwave Access, WiMAX) communication system, a 5th generation (5th Generation, 5G) system, a future 6th generation (6th Generation, 6G) system, or a new radio (New Radio, NR) system.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

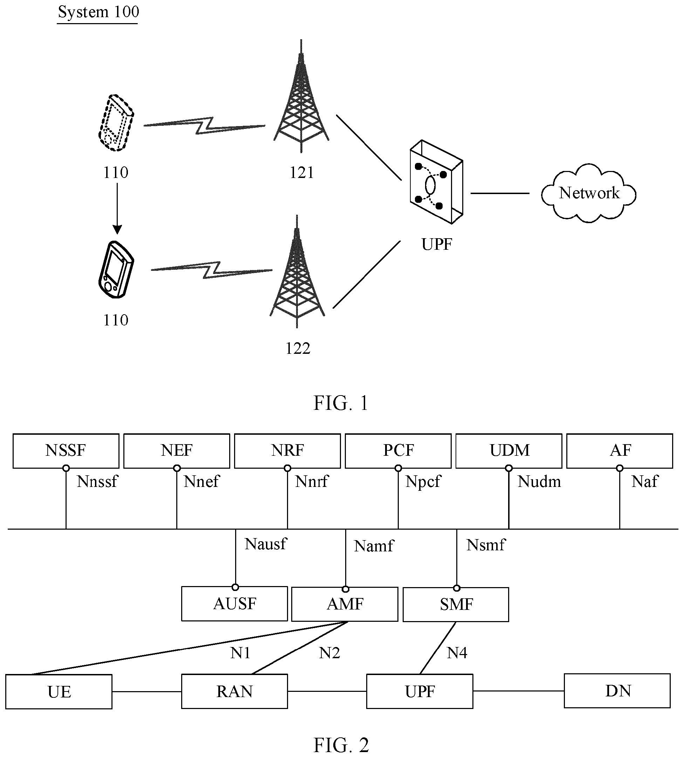

For ease of understanding embodiments of this application, a schematic of a structure of a communication system 100 according to an embodiment of this application is first briefly described with reference to FIG. 1. As shown in FIG. 1, the communication system 100 may include at least one user equipment, for example, the user equipment 110 shown in FIG. 1. The communication system 100 may further include two access network devices, for example, an access network device 121 and an access network device 122 shown in FIG. 1. When the user equipment 110 is connected to the access network device 121, and the user equipment 110 is outside network coverage or a communication signal between the user equipment 110 and the access network device 121 is poor, a handover procedure may be triggered for handover to a cell of the access network device 122, and communicate with the access network device 122. The access network device 122 forwards data to a data network by using a UPF.

In this embodiment of this application, the access network device 121 may be referred to as a source access network device, and the access network device 122 may be referred to as a target access network device. The user equipment may initiate a handover procedure from the source access network device to the target access network device. After completing the handover process, the user equipment disconnects from the source access network device, to implement uplink and downlink data transmission between the user equipment and the target access network device.

FIG. 2 is a schematic of a network architecture 200 of a communication system according to this application.

As shown in FIG. 2, a network architecture of the communication system includes but is not limited to the following network elements.
1. User equipment (UE): The user equipment in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The user equipment may be a device that provides voice/data connectivity for a user, for example, a handheld device or a vehicle-mounted device that has a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication capability, a computing device or another processing device connected to a wireless modem, a vehicle-mounted device, a wearable device, user equipment in a future 5G network, user equipment in a future evolved public land mobile network (public land mobile network, PLMN), and the like. This is not limited in this embodiment of this application.

By way of example but not limitation, in embodiments of this application, the user equipment may further be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in this embodiment of this application, the user equipment may alternatively be user equipment in an internet of things (internet of things, IoT) system. The IoT is an important part of future information technology development. A main technical feature of the IoT is to connect things to a network by using a communication technology, to implement a smart network for human-machine interconnection and thing-thing interconnection.

In embodiments of this application, the IoT technology can implement massive connections, in-depth coverage, and terminal power saving by using, for example, a narrow band (narrow band) NB technology. For example, an NB may include one resource block (resource block, RB). In other words, a bandwidth of the NB is only 180 KB. To implement massive access, terminals need to be discrete in access. According to a communication method in embodiments of this application, a congestion problem that occurs in the IoT technology when massive terminals access a network through the NB can be effectively resolved.

In addition, an access device in embodiments of this application may be a device configured to communicate with user equipment, and the access device may also be referred to as an access network device or a radio access network device. For example, the access device may be an evolved NodeB (evolved NodeB, eNB or eNodeB) in an LTE system, or may be a radio controller in a cloud radio access network (cloud radio access network, CRAN) scenario. Alternatively, the access device may be a relay station, an access point, a vehicle-mounted device, a wearable device, an access device in a future 5G network, an access device in a future evolved PLMN network, or the like, may be an access point (access point, AP) in a WLAN, or may be a gNB in a new radio (new radio, NR) system. This is not limited in embodiments of this application.

In addition, in this embodiment of this application, the user equipment may further communicate with user equipment in another communication system, for example, inter-device communication. For example, the user equipment may further transmit (for example, send and/or receive) a time synchronization packet with the user equipment in another communication system.

2. Access device (AN/RAN): The access device in embodiments of this application may be a device configured to communicate with user equipment, and the access device may also be referred to as an access network device or a radio access network device. For example, the access device may be an evolved NodeB (evolved NodeB, eNB, or eNodeB) in an LTE system, may be a radio controller in a cloud radio access network (cloud radio access network, CRAN) scenario. Alternatively, the access device may be a relay station, an access point, a vehicle-mounted device, a wearable device, an access device in a 5G network, an access device in a future evolved PLMN network, or the like, may be an access point (access point, AP) in a WLAN, or may be a gNB in an NR system. This is not limited in embodiment of this application.

In addition, in embodiments of this application, the access device is a device in a RAN, in other words, the access device is a RAN node that enables the user equipment to access a wireless network. For example, by way of example but not limitation, the access device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB or a home NodeB, HNB), a baseband unit (baseband unit, BBU), or a wireless fidelity (wireless fidelity, Wi-Fi) access point (access point, AP). In a network structure, the network device may include a central unit (central unit, CU) node or a distributed unit (distributed unit, DU) node, a RAN device including a CU node and a DU node, or a RAN device including a control plane CU node (CU-CP node), a user plane CU node (CU-UP node), and a DU node.

The access device provides a service for a cell. The user equipment communicates with the access device by using a transmission resource (for example, a frequency domain resource, or in other words, a frequency spectrum resource) used by the cell. The cell may be a cell corresponding to the access device (for example, a base station). The cell may belong to a macro base station, or a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are applicable to providing a high-speed data transmission service.

In addition, a plurality of cells may simultaneously operate in a same frequency band on a carrier in the LTE system or the 5G system. In some special scenarios, it may also be considered that a concept of the carrier is equivalent to that of the cell. For example, in a carrier aggregation (carrier aggregation, CA) scenario, when a secondary component carrier is configured for UE, both a carrier index of the secondary component carrier and a cell identifier (cell identifier, Cell ID) of a secondary cell working on the secondary component carrier are carried. In this case, it may be considered that a concept of a carrier is equivalent to a concept of a cell. For example, accessing a carrier by the user equipment is equivalent to accessing a cell.

The communication system in this application may be further applicable to a vehicle to everything (vehicle to everything, V2X) technology. In other words, the user equipment in this application may alternatively be a vehicle, for example, an intelligent vehicle or an autonomous vehicle.

Herein, "X" in V2X represents different communication targets, and V2X may include but is not limited to vehicle to vehicle (vehicle to vehicle, V2V), vehicle to infrastructure (vehicle to infrastructure, V2I), vehicle to network (vehicle to network, V2N), and vehicle to pedestrian (vehicle to pedestrian, V2P).

In the V2X, the access device may configure a "zone (zone)" for the UE. The zone may also be referred to as a geographical area. After the zone configuration, the world is divided into a plurality of zones, and the zones are defined by reference points, lengths, and widths. When determining a zone identifier (identifier, ID), the UE uses a zone length, a zone width, a quantity of zones above the length, a quantity of zones above the width, and a zone reference point to perform a remainder operation. The foregoing information may be configured by the access device.

A V2X service may be provided in two manners: a manner based on a proximity-based service communication (Proximity-based Service Communication 5, PC5) interface and a manner based on a Uu interface. A PC5 interface is an interface defined based on a sidelink (sidelink). Through such an interface, communication devices (for example, vehicles) may directly communicate with each other. The PC5 interface may be used out of coverage (out of coverage, OOC) and in coverage (in coverage, IC), but only an authorized communication device can use the PC5 interface for transmission.
3. An access and mobility management function (Access and Mobility Management Function, AMF) network element: is mainly used for mobility management, access management, and the like, and may be configured to implement another function in a mobility management entity (mobility management entity, MME) function except session management in an LTE system, for example, functions such as access authorization/authentication. When providing a service for a session in the user equipment, the AMF network element provides a control plane storage resource for the session, to store a session identifier, an SMF network element identifier associated with the session identifier, and the like. In this embodiment of this application, the access and mobility management function network element may be configured to implement a function of an access and mobility management network element.
4. A session management function (Session Management Function, SMF) network element is mainly configured to perform session management, allocate and manage an internet protocol (internet protocol, IP) address of user equipment, select and manage a user plane function, perform policy control or a termination point of a charging function interface, and perform downlink data notification. In this embodiment of this application, the session management function network element may be configured to implement a function of a session management network element.
5. A policy control function (Policy Control Function, PCF) network element is a unified policy framework used to guide network behavior, and provides policy rule information, a traffic-based charging control function, and the like for a control plane function network element (for example, an AMF or an SMF network element).
6. A unified data management (unified data management, UDM) network element is mainly responsible for: processing subscription data of UE, including storage and management of a user identifier, user subscription data, authentication data, and the like.
7. A user plane function (User Plane Function, UPF) network element may be used for packet routing and forwarding, or quality of service (quality of service, QoS) processing of user plane data, or the like. The user data may be accessed to a data network (data network, DN) by using the network element, or may be received from the data network, and transmitted to the user equipment by using an access network device. A transmission resource and a scheduling function that are used by the UPF network element to provide a service for the user equipment are managed and controlled by the SMF network element. In embodiments of this application, the user plane function network element may be configured to implement a function of a user plane network element.
8. A network exposure function (Network Exposure Function, NEF) network element is configured to securely expose services, capabilities, and the like provided by a 3GPP network function to the outside, and mainly supports secure interaction between a 3GPP network and a third-party application.
9. An application function (Application Function, AF) network element is configured to perform application-affected data routing, access a network exposure function network element, or interact with a policy framework to perform policy control, for example, affect data routing decision, a policy control function, or provide some third-party services for a network side.
10. A network slice selection function (Network Slice Selection Function, NSSF) network element is mainly responsible for network slice selection, and determines, based on slice selection assistance information of UE, subscription information, and the like, a network slice instance that the UE is allowed to access.
11. An authentication server (Authentication Server Function, AUSF) network element supports 3GPP and non-3GPP access authentication.
12. A network repository function (Network Repository Function, NRF) network element supports network function registration and discovery.
13. A unified data storage function (Unified Data Repository, UDR) network element stores and obtains subscription data used by UDM and a PCF.

In the network architecture, an N2 interface is a reference point between a RAN and an AMF entity, and is used to send a NAS (Non-Access Stratum, non-access stratum) message and the like. An N3 interface is a reference point between a RAN and a UPF network element, and is used to transmit user plane data and the like. An N4 interface is a reference point between an SMF network element and a UPF network element, and is used to transmit information, for example, tunnel identification information of an N3 connection, data buffer indication information, and a downlink data notification message.

It should be understood that the UE, the (R)AN, the UPF, and the DN in FIG. 2 are generally referred to as data plane network functions and entities. Data traffic of a user may be transmitted by using a PDU session established between the UE and the DN, and the transmission passes through two network function entities: the (R)AN and the UPF. Other parts are referred to as control plane network functions and entities, and are mainly responsible for functions such as authentication and authorization, registration management, session management, mobility management, and policy control, to implement reliable and stable transmission of user-layer traffic.

It should be understood that the foregoing network architecture applied to embodiments of this application is merely an example of a network architecture described from a perspective of a conventional point-to-point architecture and a service-based architecture, and a network architecture applicable to embodiments of this application is not limited thereto. Any network architecture that can implement functions of the foregoing network elements is applicable to embodiments of this application.

It should be understood that names of interfaces between network elements in FIG. 2 are merely examples, and names of interfaces in specific implementation may be other names. This is not specifically limited in this application herein. In addition, names of messages (or signaling) transmitted between the foregoing network elements are merely examples, and do not constitute any limitation on functions of the messages.

It should be noted that the foregoing "network element" may also be referred to as an entity, a device, an apparatus, a module, or the like. This is not specifically limited in this application. In addition, in this application, for ease of understanding and description, a description of a "network element" is omitted in some descriptions. For example, an SMF network element is referred to as an SMF for short. In this case, the "SMF" should be understood as an SMF network element or an SMF entity. Descriptions of same or similar cases are omitted below.

It may be understood that the entities or the functions may be network elements in a hardware device, may be software functions running on dedicated hardware, or may be virtualized functions instantiated on a platform (for example, a cloud platform).

The communication method and apparatus provided in embodiments of this application may be applied to a service that has a high requirement on a service transmission delay and reliability in a handover process of a user, for example, a service that has a high requirement on real-time data transmission, for example, VR, AR, and MR. An application scenario is not limited in this embodiment of this application.

For ease of understanding embodiments of this application, a handover procedure in the conventional technology is first briefly described.

In an existing handover procedure, mobility management of UE in a connected state is controlled by a network device. To be specific, the network device sends a handover message to indicate a cell to which the UE is handed over and how to perform handover. Specifically, after receiving the handover message, the UE accesses the target cell based on content included in the handover message. Therefore, successful sending of the handover message is a necessary condition for ensuring successful handover in a conventional handover mechanism.

In the following embodiments, an example in which a first access network device is used as a source access network device, a second access network device is used as a target access network device, and first UE is used as a terminal device is used for description.

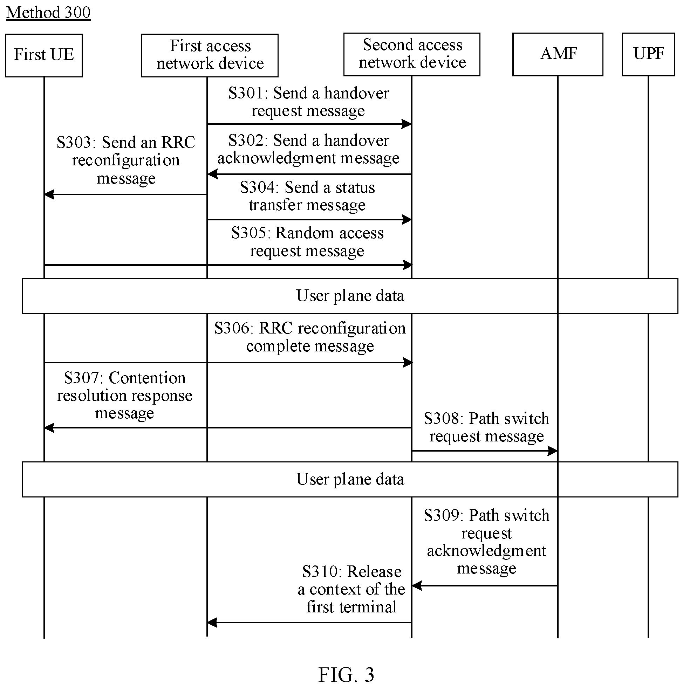

FIG. 3 is an interaction diagram of a communication method in a conventional handover procedure according to an embodiment of this application. The method 300 may include the following steps.

S301: A first access network device sends a handover request message to a second access network device.

S302: The second access network device determines, based on a status, for example, a quantity of connections of the second access network device, whether to allow access of first UE, and if the access of the first UE is allowed, sends a handover acknowledgment message to the first access network device, where the handover acknowledgment message includes parameters such as a new cell-radio network temporary identifier (cell-radio network temporary identifier, C-RNTI) C-RNTI and a security-related algorithm of the second access network device.

S303: After receiving the handover acknowledgment message sent by the second access network device, the first access network device sends an RRC reconfiguration message (a handover command) to the first UE, where content included in the RRC reconfiguration message is from the handover acknowledgment message in S302. Specifically, a handover command in an NR system includes related information of a target cell and a related configuration parameter needed for the first UE to access the target cell. For example, the handover command includes information about the target cell (for example, a PCI of the target cell and frequency information corresponding to the target cell), a C-RNTI allocated by the target cell to the first UE, and information about a RACH resource needed for accessing the target cell.

S304: The first access network device sends a status transfer (status transfer, SN) sequence number message to the second access network device, to notify the second access network device of a receiving status of uplink data.

After the first access network device sends the SN status transfer message to the second access network device, the first access network device starts to forward, to the second access network device, a downlink PDCP SDU that is not sent and downlink data that is from a UPF.

S305: The first UE initiates random access to the second access network device based on the handover command. In an existing handover procedure, the first UE disconnects from the first access network device, and a temporary interruption occurs when the first UE receives and sends data before the first UE successfully accesses the second access network device.

S306: The first UE sends an RRC reconfiguration complete message to the second access network device.

S307: The second access network device sends a contention resolution response to the first UE, and the first UE determines, based on the response, whether the first UE successfully accesses the second access network device.

After the first UE determines, based on the contention resolution response, that contention resolution succeeds, it is considered that the first UE successfully accesses the second access network device.

S308: After receiving a handover complete message of the first UE, the second access network device sends a path switch request message to an AMF, to indicate the UPF to switch a downlink path to the second access network device.

S309: After receiving a path switch acknowledgment message of the AMF, the second access network device notifies the first access network device to release a context of the first UE.

S310: The second access network device releases the context of the first UE.

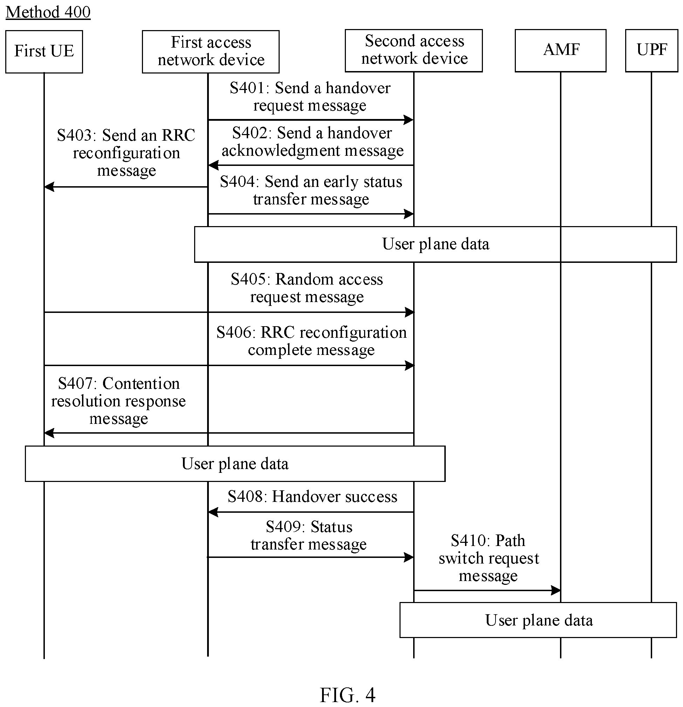

FIG. 4 is an interaction diagram of a communication method in a non-conventional handover procedure according to an embodiment of this application. The handover method may also be referred to as a dual active protocol stack (dual active protocol stack, DAPS) DAPS handover method. The method 400 may include the following steps.

S401: A first access network device sends a handover request message to a second access network device.

S402: The second access network device determines, based on a status, for example, a quantity of connections of the second access network device, whether to allow access of first UE, and if the access of the first UE is allowed, sends a handover acknowledgment message to the first access network device, where the handover acknowledgment message includes parameters such as a C-RNTI, a security-related algorithm of the second access network device, or the like.

S403: After receiving the handover acknowledgment message sent by the second access network device, the first access network device sends an RRC reconfiguration message (a handover command) to the first UE, where content included in the RRC reconfiguration message is from the handover acknowledgment message in S302. Specifically, a handover command in an NR system includes related information of a target cell and a related configuration parameter needed for the first UE to access the target cell. For example, the handover command includes information about the target cell (for example, a PCI of the target cell and frequency information corresponding to the target cell), a C-RNTI allocated by the target cell to the first UE, and information about a RACH resource needed for accessing the target cell.

S404: The first access network device sends an early status transfer message to the second access network device, where a downlink PDCP SDU count value transferred in the early status transfer message indicates a PDCP SN and a hyper frame number (hyper frame number, HFN) that are of a first PDCP SDU forwarded by a source gNB to a target gNB.

S405: The first UE initiates random access to the second access network device based on the handover command, and the first UE maintains a connection to the first access network device, and continues to communicate with the first access network device.

S406: The first UE sends an RRC reconfiguration complete message to the second access network device.

S407: The second access network device sends a contention resolution response to the first UE, and the first UE determines, based on the response, whether the first UE successfully accesses the second access network device.

After the first UE determines, based on the contention resolution response, that contention resolution succeeds, it is considered that the first UE successfully accesses the second access network device.

S408: After receiving a handover complete message of the first UE, the second access network device sends the handover complete message to the first access network device, to notify the first access network device that the first UE has successfully accessed the second access network device.

S409: The first access network device sends an SN status transfer message to the second access network device, to notify the second access network device of an uplink PDCP SDU count value and a downlink PDCP SDU count value, and stops allocating an SN to a downlink PDCP SDU.

The second access network device does not forward, to a UPF, data that is less than an uplink count, and a target base station uses a PDCP SN in a downlink count to obtain first downlink data to which no PDCP SN is allocated.

S410: The second access network device sends a path switch request message to an AMF, to notify the UPF to switch a downlink path to the second access network device, and after the second access network device receives a path switch acknowledgment message of the AMF, the second access network device notifies the first access network device to release a context of the first UE.

Specific embodiments are used below to describe in detail the technical solutions of this application. The following several specific embodiments may be applied to the handover procedure of the foregoing method 300 or method 400. The following several specific embodiments may be combined with each other, and same or similar concepts or processes may not be described in detail again in some embodiments.

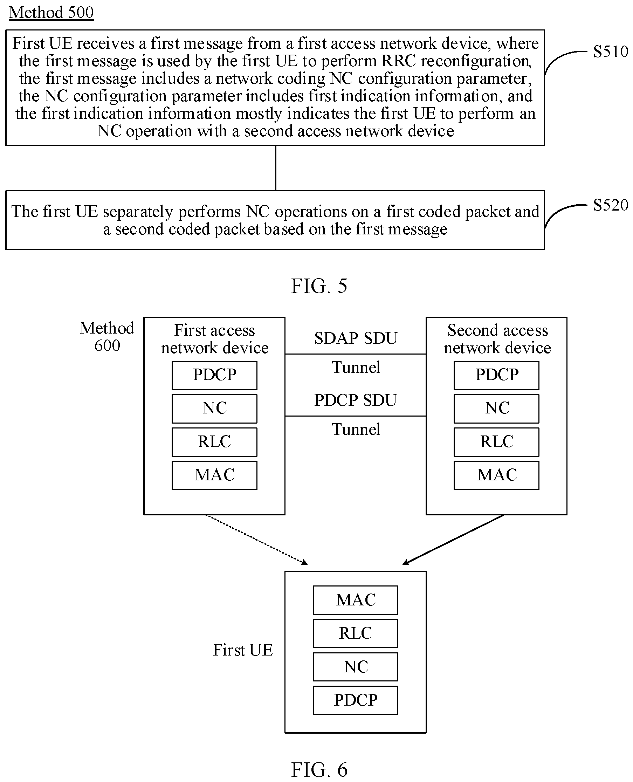

FIG. 5 is a schematic block diagram of a communication method according to an embodiment of this application. This embodiment may be specifically applied to the handover procedures of the foregoing method 300 and the foregoing method 400. The method 500 may include the following steps.

S510: First UE receives a first message from a first access network device, where the first message is used by the first UE to perform RRC reconfiguration, the first message includes a network coding NC configuration parameter, the NC configuration parameter includes first indication information, and the first indication information indicates the first UE to perform an NC operation with a second access network device.

Specifically, after receiving a handover acknowledgment message sent by the second access network device, the first access network device sends the first message to the first UE. The first message is used by the first UE to perform RRC reconfiguration. The first message is, for example, an RRC reconfiguration message or an RRC handover command message.

The first message may include a network coding NC configuration parameter and a DRB ID, and the NC configuration parameter includes: a configuration redundancy ratio, a coded packet size, a coding type, the first indication information, and the like.

The NC configuration parameter is used by the first UE to reconfigure an NC parameter.

The first indication information indicates the first UE to perform an NC operation with second access network device. Specifically, the first indication information may be understood as follows: When header compression is performed on a group of data packets at a PDCP layer of the first access network device and the first UE switches to the second access network device, a network coding entity of a DRB is indicated to continue to perform an NC operation.

In a possible implementation, the second access network device establishes an NC entity based on the NC configuration parameter, and the second access network device indicates, based on the first indication information, the established NC entity to continue to perform an NC operation.

In a possible implementation, the first UE establishes a second entity, and the first UE continues to perform an NC operation based on the first indication information without resetting a variable of the NC entity.

In a possible implementation, the NC configuration parameter includes second indication information, and the second indication information indicates the second access network device to perform an NC entity reset operation.

Specifically, the network coding entity associated with the DRB is reset, and the reset may be understood as resetting a state variable. For example, the first access network device receives a group of data packets from a UPF, and the group of data packets includes five data packets. In a handover process, the first access network device has submitted three packets to the NC entity for coding, and includes the NC configuration parameter in the RRC reconfiguration message when sending the RRC reconfiguration message to the first UE. The NC configuration parameter includes second indication information, to indicate the UE to reset an NC entity of a second access network device associated with the DRB, in other words, the second access network device sends the remaining two packets based on NC coding group sequence numbers starting from 0. In other words, the five packets are divided into two coding groups, where 1, 2, and 3 are a first group, and 4 and 5 are a second group.

Specific content included in the NC configuration parameter is not limited in this embodiment of this application.

S520: The first UE separately performs NC operations on a first coded packet and a second coded packet based on the first message.

It should be understood that the first coded packet is a coded packet generated through coding or received by an NC entity corresponding to the first access network device, and the second coded packet is a coded packet generated through coding or received by an NC entity corresponding to the second access network device.

Specifically, in a non-DAPS scenario, the first UE receives the first coded packet sent by the first access network device, and submits the first coded packet to the NC entity for decoding. In the handover process, the first access network device sends a part of data packets to the second access network device. The second access network device performs NC coding based on the first indication information or a second indication configuration parameter to obtain the second coded packet, and sends the second coded packet to the first UE for decoding. In this case, the first UE resets the NC entity, discards the first coded packet on the NC entity, and only decodes the second coded packet, so that independent NC operations of the first coded packet and the second coded packet can be implemented.

In a DAPS scenario, the first UE receives the first coded packet sent by the first access network device, and submits the first coded packet to a first NC entity associated with the first access network device for decoding. In the handover process, the first access network device sends a part of data packets to the second access network device. The second access network device establishes a second NC entity based on the NC configuration parameter, continues to perform NC coding to obtain the second coded packet, and sends the second coded packet to the first UE for decoding. Specifically, the first UE establishes, based on the NC configuration parameter, the second NC entity associated with the second access network device, and submits the second coded packet to the second NC entity for decoding, so that the UE may separately perform NC operations on the first coded packet and the second coded packet on different NC entities.

It should be understood that, in the DAPS scenario, the second access network device re-establishes an NC entity based on the NC configuration parameter. Therefore, the second indication information is not needed to reset the NC entity. It may also be understood that an NC coding group sequence number of a received data packet is coded starting from 0. Compared with the first coded packet, a coded packet coded by using the established NC entity is an independent coded packet, and does not need to be jointly decoded with the first coded packet.

In a possible implementation, in the DAPS scenario, the first access network device may further send the first coded packet to the second access network device.

In this case, the first access network device sends third indication information to the second access network device, to indicate the first UE to submit the first coded packet from the second access network device to the first NC entity associated with the first access network device to perform an NC operation, and perform decompression processing by using a security function and/or an IP header associated with the first access network device.

Correspondingly, the first access network device may send fourth indication information to the second access network device, to indicate the first UE to submit the second coded packet from the second access network device to the second NC entity associated with the second access network device to perform an NC operation, and perform decompression processing by using a security function and/or an IP header associated with the second access network device.

Optionally, the third indication information or the fourth indication information may alternatively be set by the second access network device and sent to the first UE.

In a possible implementation, the third indication information or the fourth indication information may be an indication field in a coded packet, and the indication field being the third indication information is different from the indication field being the fourth indication information.

For example, an indication field is set in the first coded packet, and a value of the indication field is 1, indicating that the first coded packet is a coded packet from the first access network device. Correspondingly, the first UE indicates, based on the indication field whose value is 1, the NC entity to process the first coded packet by using the NC entity associated with the first access network device, and perform decompression processing by using the security function and/or the IP header of the first access network device.

For another example, an indication field is set in the second coded packet, and a value of the indication field is 0, indicating that the second coded packet is a coded packet from the second access network device. Correspondingly, the first UE indicates, based on the indication field whose value is 0, the NC entity to process the second coded packet by using the NC entity associated with the second access network device, and perform decompression processing by using the security function and/or the IP header of the second access network device.

FIG. 6 is a schematic of a structure of a method for sending a network coded packet according to an embodiment of this application. This embodiment may be specifically applied to the handover procedure of the foregoing method 300. Descriptions of the method 600 in FIG. 6 are also detailed descriptions of the method 500 in FIG. 5.

A user plane data transmission process is shown in FIG. 6. It can be learned from FIG. 6 that a first access network device performs data transmission with first UE through an RLC communication link (PDCP-RLC-MAC-first UE) of the first access network device, a second access network device performs data transmission with the first UE through an RLC communication link (PDCP-RLC-MAC-first UE) of the second access network device, and the first access network device and the second access network device transmit SDAP SDU data and SDCP SDU data through a tunnel.

It should be noted that the first access network device and the second access network device perform IP header compression on data at a PDCP layer. However, IP header compression parameters and IP header compression contexts of the first access network device and the second access network device may be different. Therefore, sizes of coded packets that are submitted to respective NC entities for performing NC operations are different. Therefore, the first UE cannot perform joint decoding on this group of coded packets.

In a conventional handover procedure, interaction between the first access network device and the second access network device is described in step S304 in the foregoing method 300. After the first UE receives an RRC reconfiguration message from the first access network device, the first access network device sends an SN status transfer message to the second access network device. After the first access network device sends the SN status transfer message to the second access network device, the first access network device starts to forward, to the second access network device, a downlink PDCP SDU that is not sent and downlink data that is from a UPF.

Specifically, the downlink PDCP SDU that is not sent and the downlink data that is from the UPF are used by the second access network device to submit, based on first indication information or second indication information, to an NC layer (an example of a second NC entity) associated with the second access network device to generate a second coded packet. An SDU that is transmitted to an NC layer (an example of a first NC entity) of the first access network device may be used to generate a first coded packet, and is not used to forward the first coded packet to the second access network device.

It should be understood that, in a handover phase, in correspondence to step S305 in the handover procedure in the foregoing method 300, after the first UE sends a random access request message to the second access network device based on the RRC reconfiguration message, the first UE disconnects from the first access network device. Therefore, before the first UE successfully accesses the second access network device, data transmission of the first UE is temporarily interrupted.

Specifically, the first access network device sends the first coded packet to the first UE. After the first UE disconnects from the first access network device, the first UE stops processing the first coded packet.

After a handover is completed, the first UE is connected to the second access network device, and the first UE receives the second coded packet, and submits the second coded packet to the NC entity associated with the second access network device to perform decoding processing on the coded packet.

It should be understood that the foregoing solution is based on an example in which NC function is located at a separate protocol layer. An NC function may alternatively be located at the PDCP layer or an RLC layer. When the NC is located at the PDCP layer, an NC function layer on a UE side may be replaced with two independent NC function entities at the PDCP layer. When the NC entity is located at the RLC layer, the NC function layer on the UE side may be replaced with two independent NC function entities at the RLC layer.

According to the solution provided in this embodiment of this application, in a handover procedure triggered by the user equipment, the first access network device and the second access network device separately perform NC operations, and the first UE may separately use the NC entities for NC communication between the access network devices, to implement uninterrupted or continuous network coding communication, and meet delay and reliability requirements in a service transmission process.

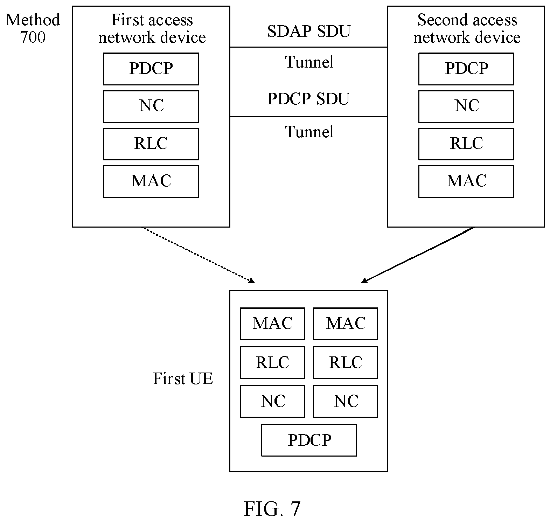

FIG. 7 is another schematic of a structure of a method for sending a network coded packet according to an embodiment of this application. This embodiment may be specifically applied to the handover procedure of the foregoing method 400. Descriptions of the method 700 in FIG. 7 are also detailed descriptions of the method 500 in FIG. 5.

A user plane data transmission process is shown in FIG. 7. It can be learned from FIG. 7 that a first access network device performs data transmission with first UE through an RLC communication link (PDCP-RLC-MAC-first UE) of the first access network device, a second access network device performs data transmission with the first UE through an RLC communication link (PDCP-RLC-MAC-first UE) of the second access network device, and the first access network device and the second access network device transmit SDAP SDU data and/or PDCP SDU data through a tunnel.

Specifically, before the first UE accesses the second access network device, the first UE does not disconnect from the first access network device. After receiving a handover acknowledgment message, the second access network device establishes an NC entity based on first indication information and an NC configuration parameter that are in the handover acknowledgment message, and associates the NC entity with a same DRB PDCP. Before successfully accessing the second access network device, the UE performs data transmission through the RLC link of the first access network device.

It should be noted that the first access network device and the second access network device perform IP header compression on data at a PDCP layer. However, IP header compression parameters and IP header compression contexts of the first access network device and the second access network device may be different. Therefore, sizes of coded packets that are submitted to respective NC entities for performing NC operations are different. Therefore, the first UE cannot perform joint decoding on this group of coded packets.

In a DAPS handover procedure, interaction between the first access network device and the second access network device is described in step S404 in the foregoing method 400. After the first UE receives an RRC reconfiguration message from the first access network device, the first access network device sends an early status transfer message to the second access network device. The first access network device starts to forward, to the second access network device, a downlink PDCP SDU that is not sent and downlink data that is from a UPF, and transfers a downlink PDCP SDU count value in the early status transfer message, to indicate a PDCP SN and an HFN that are of a first PDCP SDU forwarded by the first access network device to the second access network device.

Specifically, the first access network device receives the downlink data of the UPF, allocates PDCP SNs to data packets, and forwards the data packet in a sequence of the PDCP SN. The NC entity of the first access network device generates a first coded packet and forwards the first coded packet to the first UE by using an RLC layer, and the first UE submits the first coded packet to the NC entity associated with the first access network device to perform an NC operation. In addition, a PDCP SDU and a corresponding PDCP SN are forwarded to the second access network device through a tunnel, so that after the second access network device submits the PDCP SDU and the corresponding PDCP SN to a PDCP entity for IP header compression and key encryption, the second compressed packet is delivered to the first UE by using the established NC entity, and the first UE submits the second coded packet to the NC entity associated with the second access network device for processing.

After a handover is completed, the first UE disconnects from the first access network device, and the first UE and the second access network device complete establishment of a communication link. The first UE submits the PDCP SDU to the NC entity associated with the second access network device to generate a coded packet, and sends the coded packet to the second access network device.

It should be understood that the foregoing solution is based on an example in which an NC function is located at a separate protocol layer. The NC function may alternatively be located at the PDCP layer or the RLC layer. When the NC is located at the PDCP layer, an NC function layer on a UE side may be replaced with two independent NC function entities at the PDCP layer. When the NC function is located at the RLC layer, an NC function entity on the UE side may be replaced with two independent NC function entities at the RLC layer.

According to the solution provided in this embodiment of this application, in a handover procedure triggered by the user equipment, the first access network device and the second access network device separately perform NC operations, and the first UE may separately use associated NC entities for NC communication between different access network devices, to implement uninterrupted or continuous network coding communication, and meet delay and reliability requirements in a service transmission process.

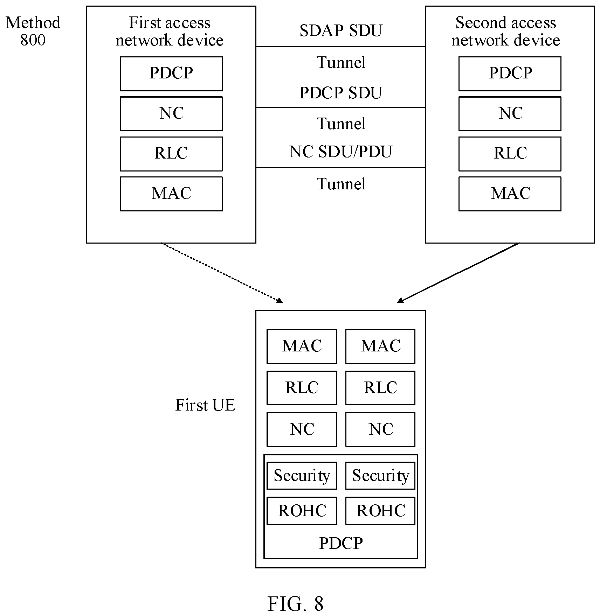

FIG. 8 is another schematic of a structure of a method for sending a network coded packet according to an embodiment of this application. This embodiment may be specifically applied to the handover procedure of the foregoing method 400. Descriptions of the method 800 in FIG. 8 are also detailed descriptions of the method 500 in FIG. 5.

A user plane data transmission process is shown in FIG. 8. It can be learned from FIG. 8 that a first access network device performs data transmission with first UE through an RLC communication link (PDCP-RLC-MAC-first UE) of the first access network device, a second access network device performs data transmission with the first UE through an RLC communication link (PDCP-RLC-MAC-first UE) of the second access network device, and the first access network device and the second access network device transmit SDAP SDU data, PDCP SDU data, NC SDU data, and NC PDU data through a tunnel.

Specifically, before the first UE accesses the second access network device, the first UE does not disconnect from the first access network device. After receiving a handover acknowledgment message, the second access network device establishes an NC entity based on first indication information and an NC configuration parameter that are in the handover acknowledgment message, and associates with a same DRB PDCP. Before successfully accessing the second access network device, the first UE performs data transmission through the RLC link of the first access network device.

It should be noted that the first access network device and the second access network device perform IP header compression on data at a PDCP layer. However, IP header compression parameters and IP header compression contexts of the first access network device and the second access network device may be different. Therefore, sizes of coded packets that are submitted to respective NC entities for performing NC operations are different. Therefore, the first UE cannot perform joint decoding on this group of coded packets.

In a DAPS handover procedure, interaction between the first access network device and the second access network device is described in step S404 in the method 400. After the first UE receives an RRC reconfiguration message from the first access network device, the first access network device sends an early status transfer message to the second access network device. The first access network device starts to forward, to the second access network device, a downlink PDCP SDU that is not sent and downlink data that is from a UPF, and may further forward NC SDU data and NC PDU data, and set indication information, to indicate that the NC SDU data and the NC PDU data are data from the first access network device. In addition, a downlink PDCP SDU count value is transferred in the early status transfer message, to indicate a PDCP SN and an HFN that are of a first PDCP SDU forwarded by the first access network device to the second access network device.

Specifically, the first access network device receives the downlink data of the UPF, allocates PDCP SN and an NC group number to a data packet, and forwards the data packet in a sequence of the PDCP SN. The NC entity of the first access network device generates a first coded packet and forwards the first coded packet to the first UE by using an RLC entity, and the first UE submits the first coded packet to the NC entity associated with the first access network device to perform an NC operation to generate the first coded packet. In addition, a PDCP SDU and a corresponding PDCP SN are forwarded to the second access network device through a tunnel, and the second access network device submits the PDCP SDU and the corresponding PDCP SN to a PDCP layer for IP header compression and key encryption, generates a second coded packet by using the established NC entity, and delivers the second coded packet to the first UE by using an RLC entity of the second access network device. The first UE submits the second coded packet to the NC entity associated with the second access network device for processing.

In addition, the first access network device may further forward the NC SDU data and the NC PDU data to the second access network device, and indicate, by using third indication information, to the first UE that the NC PDU data is data from the first access network device. The first UE submits the coded packet to the NC entity associated with the first access network device for processing, or may indicate, by using fourth indication information, the first UE to submit the second coded packet to the NC entity associated with the second access network device for processing.

Optionally, the third indication information and the fourth indication information may be indication fields included in the coded packets, and the indication field being the third indication information is different from the indication field being the fourth indication information.

It may be understood that when the third indication information does not exist, the data received from the first access network device may be understood as that the coded packet is the first coded packet by default. It may be understood that when the fourth indication information does not exist, the data received from the second access network device may be understood as that the coded packet is the second coded packet by default.

Optionally, the third indication information and the fourth indication information may be set by the first access network device, or may be set by the second access network device.

Optionally, when the first access network device forwards downlink NC PDU data to the second access network device through a user plane tunnel, an NC group number may be carried in a field of a GTP-U protocol header, and NC data is carried in a field of a GTP-U protocol payload.

It should be understood that the second access network device receives the NC PDU data (that is, the first coded packet) from the first access network device, and the second access network device forwards the NC PDU data to the first UE. The first UE indicates, based on the third indication information, the NC entity to process the data by using the NC entity associated with the first access network device, and perform decompression processing by using a security function and an IP header of the first access network device.

It should be understood that the second access network device receives the PDCP SDU data from the first access network device, and the second access network device performs IP header compression and key encryption by using the PDCP layer of the second access network device, and then submits the data to the NC entity for processing to generate the second coded packet. A group number used by the NC SDU of the first access network device has reached N. The NC entity of the second access network device uses an NC group number+1 to perform NC processing on the PDCP SDU from the first access network device, and sends the second coded packet to the first UE. The first UE indicates, based on the fourth indication information, the NC entity to process the data by using the NC entity associated with the second access network device, and perform decompression processing by using a security function and an IP header of the second access network device.

For example, the third indication information may be an indication field whose value is 1, indicating that the coded packet is from the first access network device. The first UE indicates, based on the indication field whose value is 1, the NC entity to process the NC PDU by using the NC entity of the first access network device, and perform decompression processing by using the security function and the IP header of the first access network device.

For another example, the fourth indication information may be an indication field whose value is 0, indicating that the coded packet is from the second access network device. The first UE indicates, based on the indication field whose value is 0, the NC entity to process the NC PDU by using the NC entity of the second access network device, and perform decompression processing by using the security function and the IP header of the second access network device.

After a handover is completed, the first UE disconnects from the first access network device, and the first UE and the second access network device complete establishment of a communication link. The first UE submits the PDCP SDU to the NC entity associated with the second access network device to generate a coded packet, and sends the coded packet to the second access network device.

It should be understood that the foregoing solution is based on an example in which NC function is located at a separate protocol layer. An NC function may alternatively be located at the PDCP layer or an RLC layer. When the NC function is located at the PDCP layer, an NC function entity layer on a UE side may be replaced with two independent NC function entities at the PDCP layer. When the NC function is located at the RLC layer, an NC function entity on a UE side may be replaced with two independent NC function entities at the RLC layer. This is not limited in this embodiment of this application.

According to the solution provided in this embodiment of this application, in a handover procedure triggered by the user equipment, the UE configures, based on a handover command, an independent NC entity to associate with a DAPS bearer of a target primary cell and a DAPS bearer of a source primary cell, and to process NC packet transmission between the first access network device and the second access network device. The first access network device may forward uncoded and coded data to the second access network device, and indicate, by using indication information, the first UE to use an associated NC entity for NC communication between different access network devices, to implement uninterrupted or continuous network coding communication, and meet delay and reliability requirements in a service transmission process.

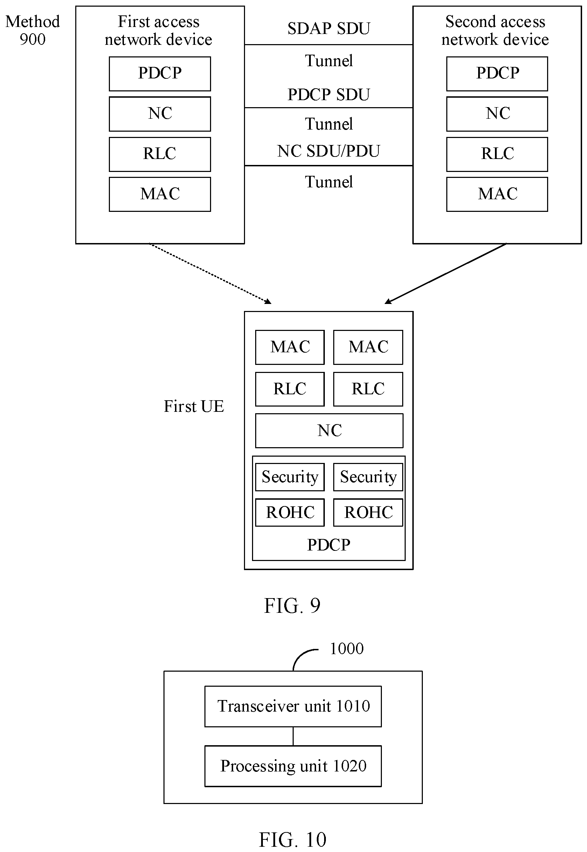

FIG. 9 is another schematic of a structure of a method for sending a network coded packet according to an embodiment of this application. This embodiment may be specifically applied to the handover procedure of the foregoing method 400.

A user plane data transmission process is shown in FIG. 9. It can be learned from FIG. 9 that a first access network device performs data transmission with first UE through an RLC communication link (PDCP-RLC-MAC-first UE) of the first access network device, a second access network device performs data transmission with the first UE through an RLC communication link (PDCP-RLC-MAC-first UE) of the second access network device, and the first access network device and the second access network device transmit SDAP SDU data, PDCP SDU data, NC SDU data, and NC PDU data through a tunnel.

Specifically, before the first UE accesses the second access network device, the first UE does not disconnect from the first access network device. After receiving a handover acknowledgment message, the second access network device continues to associate with a same DRB PDCP by using a currently established NC entity and based on first indication information and an NC configuration parameter in the handover acknowledgment message. Before successfully accessing the second access network device, the UE performs data transmission through the RLC link of the first access network device. It may be understood that the UE uses a common NC entity to perform NC data communication with the first access network device and the second access network device.

It should be noted that the first access network device and the second access network device perform IP header compression on data at a PDCP layer. However, IP header compression parameters and IP header compression contexts of the first access network device and the second access network device may be different. Therefore, sizes of coded packets that are submitted to respective NC entities for performing NC operations are different. Therefore, the first UE cannot perform joint decoding on this group of coded packets.

In a DAPS handover procedure, interaction between the first access network device and the second access network device is described in step S404 in the foregoing method 400. After the first UE receives an RRC reconfiguration message from the first access network device, the first access network device sends an early status transfer message to the second access network device. The first access network device starts to forward, to the second access network device, a downlink PDCP SDU that is not sent and downlink data that is from a UPF, may further forward NC SDU data, an NC group number allocated to the data (where the group number is a group number allocated by the first access network device to the NC SDU data), and the NC PDU data, and may set indication information, to indicate that the NC SDU data and the NC PDU data are data from the first access network device. In addition, a downlink PDCP SDU count value is transferred in the early status transfer message, to indicate a PDCP SN and an HFN that are of a first PDCP SDU forwarded by the first access network device to the second access network device.

Specifically, the first access network device receives the downlink data of the UPF, allocates PDCP SN and an NC group number to a data packet, and forwards the data packet in a sequence of the PDCP SN. The first access network device generates a first coded packet by using an NC entity of the first access network device, and forwards the first coded packet to the first UE by using an RLC entity. The first UE submits the first coded packet to a common NC entity to perform an NC operation. In addition, the first access network device forwards, to the second access network device through a user plane tunnel, a PDCP SDU and a corresponding PDCP SN, NC PDU data, NC SDU data, and an NC group number of the data.

In a possible implementation, the first access network device forwards the PDCP SDU and the corresponding PDCP SN to the second access network device through the user plane tunnel, so that after the second access network device submits the PDCP SDU and the corresponding PDCP SN to the PDCP layer for IP header compression and key encryption, the second access network device generates a second coded packet by using the established NC entity, and then delivers the second coded packet to the first UE by using the RLC entity. The first UE submits the second coded packet to the common NC entity for processing, and then submits the second coded packet to a PDCP entity associated with the second access network device for processing.

In a possible implementation, the first access network device forwards the NC PDU data to the second access network device through the user plane tunnel, and indicates, to the first UE by using third indication information, that the NC PDU data is coded packet data (that is, the first coded packet) from the first access network device. The first UE submits the coded packet to the common NC entity for processing, and then submits the coded packet to a PDCP entity associated with the first access network device for processing.

In a possible implementation, the first access network device forwards the NC SDU data (an example of the first coded data packet) and the NC group number (a first coding identifier) of the data to the second access network device through the user plane tunnel, generates the first coded packet by using the established NC entity, and then delivers the first coded packet to the first UE by using the RLC entity. The first UE submits the first coded packet to the common NC entity for processing, and then submits the first coded packet to a PDCP entity associated with the first access network device for processing.

In a possible implementation, fifth indication information may indicate the first UE to submit the first coded packet to the PDCP entity associated with the first access network device for processing.

In a possible implementation, when the fifth indication information does not exist, it may be understood that data received from the first access network device needs to be submitted to the PDCP entity of the first access network device for processing by default.

In a possible implementation, sixth indication information may indicate the first UE to submit the second coded packet to the PDCP entity associated with the second access network device for processing.

In a possible implementation, when the sixth indication information does not exist, it may be understood that data received from the second access network device indicates that data needs to be submitted to the PDCP entity of the second access network device for processing by default.

It should be understood that the first coded packet and the second coded packet belong to a same coding group, and the same coding group may be understood as that group numbers of coded packets are consecutive.

Optionally, the fifth indication information and the sixth indication information may be indication fields included in coded packets, PDCP data packets, or RLC packets, and an indication field of the fifth indication information is different from an indication field of the sixth indication information.

Optionally, the fifth indication information and the sixth indication information may be set by the first access network device, or may be set by the second access network device.

Optionally, when the first access network device forwards downlink NC PDU data to the second access network device through the user plane tunnel, an NC group number may be carried in a field of a GTP-U protocol header, and the NC data is carried in a field of a GTP-U protocol payload.

It should be understood that the second access network device receives the NC PDU data (that is, the first coded packet) from the first access network device, the second access network device forwards the NC PDU data to the first UE. The first UE indicates, based on the fifth indication information, the common NC entity to perform decompression processing on the data by using a security function and/or an IP header associated with the first access network device.

It should be understood that the second access network device receives the PDCP SDU data from the first access network device, and the second access network device performs IP header compression and/or key encryption by using the PDCP layer of the second access network device, and then submits the data to the NC entity of the second access network device for processing to generate the second coded packet. A group number used by the NC SDU of the first access network device has reached N. The NC entity of the second access network device uses N+1 to perform NC processing on the PDCP SDU from the first access network device, and sends the second coded packet to the first UE. The first UE indicates, based on the sixth indication information, to perform decompression processing on the data by using a security function and/or an IP header associated with the second access network device.

It should be understood that the second access network device receives the NC SDU data and the NC group number from the first access network device, the second access network device performs NC processing based on the NC SDU, the group number, and the NC configuration parameter to generate the first coded packet, and the second access network device forwards the first coded packet to the first UE. The first UE indicates, based on the fifth indication information, to perform decompression processing on the data by using the security function and/or the IP header associated with the first access network device.

For example, the fifth indication information may be an indication field whose value is 1, indicating that the coded packet is from the first access network device. The first UE indicates, based on the indication field whose value is 1, and perform decompression processing by using the security function and/or the IP header associated with the first access network device.

For another example, the sixth indication information may be an indication field whose value is 0, indicating that the coded packet is from the second access network device. The first UE indicates, based on the indication field whose value is 0, to perform decompression processing by using the security function and/or the IP header associated with the second access network device.

In a possible implementation, for a same DRB, NC PDU data from the first access network device has a first priority, NC SDU data from the first access network device has a second priority, PDCP SDU data from the first access network device has a third priority, and SDAP SDU data from the first access network device has a fourth priority. The second access network device may send the data based on the foregoing priorities.

In a possible implementation, the first access network device may forward only the NC PDU data and the PDCP SDU data, or may forward only the NC SDU data and the PDCP SDU data. This depends on an implementation of the first access network device, but the foregoing priority sequence may still follow a sending sequence of the second access network device. This is not limited in this embodiment of this application.

After a handover is completed, the first UE disconnects from the first access network device, and the first UE and the second access network device complete establishment of a communication link. The first UE submits the PDCP SDU to the security function and/or the IP header associated with the second access network device for decompression processing. The common NC entity generates a coded packet, and sends the coded packet to the second access network device.

It should be understood that the foregoing solution is based on an example in which NC function is located at a separate protocol layer. An NC function may alternatively be located at a PDCP layer or an RLC layer. When the NC is located at the PDCP layer, an NC function layer on a UE side may be replaced with one independent NC function entity at the PDCP layer. When the NC function is located at the RLC layer, an NC function entity on a UE side may be replaced with one independent NC function entity at the RLC layer. This is not limited in this embodiment of this application.

According to the solution provided in this embodiment of this application, in a handover procedure triggered by the user equipment, the UE configures, based on a handover command, the common NC entity to associate with a DAPS bearer of a target primary cell and a DAPS bearer of a source primary cell, and to process NC packet transmission between the first access network device and the second access network device. The first access network device may forward uncoded and coded data and group numbers of the data to the second access network device, and indicate, by using indication information, the first UE to use the common NC entity for NC communication between different access network devices. This avoids a case in which different NC PDUs generated by the second access network device and the first access network device use a same NC group number, so that the UE accurately identifies a group of network coding data for correct decoding, thereby implementing a problem of uninterrupted or continuous network coding communication, meeting a delay and reliability requirement in a service transmission process, and improving transmission efficiency.

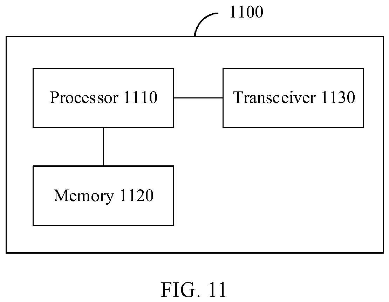

The foregoing describes in detail the methods provided in embodiments of this application with reference to FIG. 3 to FIG. 9. The following describes in detail apparatuses provided in embodiments of this application with reference to FIG. 10 and FIG. 11. It should be understood that descriptions of apparatus embodiments correspond to the descriptions of the method embodiments. Therefore, for content that is not described in detail, refer to the foregoing mode embodiments. For brevity, details are not described herein again.

The apparatus is configured to implement the foregoing embodiments and related implementations, and details that have been described are not described again. As used below, the term "module" may be a combination of software and/or hardware that implement a predetermined function. Although the apparatus described in the following embodiments is preferably implemented by software, implementation of hardware or a combination of software and hardware may also be conceived.

FIG. 10 is a schematic block diagram of a communication apparatus according to an embodiment of this application. The communication apparatus 1000 includes a transceiver unit 1010 and a processing unit 1020. The transceiver unit 1010 may implement a corresponding communication function, and the processing unit 1020 may read instructions and/or data in a storage unit, so that a communication device implements the foregoing method embodiment. The transceiver unit 1010 may also be referred to as a communication interface or a communication unit.

The communication apparatus 1000 may further include a storage unit, which may be configured to store instructions and/or data.

The communication apparatus 1000 may be configured to perform an action performed by the terminal device (the first UE) in the foregoing method embodiment. In this case, the communication apparatus 1000 may be a terminal device or a component that can be configured for the terminal device. The transceiver unit 1010 is configured to perform a receiving and sending related operation on a terminal device side in the foregoing method embodiment. The processing unit 1020 is configured to perform a processing related operation on a terminal device side in the foregoing method embodiment.

Alternatively, the communication device 1000 may be configured to perform actions performed by the network devices (the first access network device and the second access network device) in the foregoing method embodiments. The transceiver unit 1010 is configured to perform a receiving and sending-related operation of the first access network device and the second access network device in the foregoing method embodiments. The processing unit 520 is configured to perform a processing-related operation of the first access network device and the second access network device in the foregoing method embodiments.

It should be understood that a specific process of performing a corresponding step by each unit is described in detail in the foregoing method embodiment. For brevity, details are not described herein again.

As shown in FIG. 11, an embodiment of this application further provides a communication apparatus 1100. The communication apparatus 1100 includes a processor 1110. The processor 1110 is coupled to a memory 1120. The memory 1120 is configured to store a computer program or instructions and/or data. The processor 1110 is configured to execute the computer program or the instructions and/or the data stored in the memory 1120. The communication apparatus 1100 further includes a transceiver 1130. The transceiver 1130 is configured to receive and/or send a signal. For example, the processor 1110 is configured to control the transceiver 1130 to receive and/or send a signal. In this case, the method in the foregoing method embodiment is performed.

Optionally, the communication apparatus 1100 includes one or more processors 1110.

Optionally, as shown in FIG. 11, the communication apparatus 1100 may further include the memory 1120.

Optionally, the communication apparatus 1100 may include one or more memories 1120.

Optionally, the memory 1120 and the processor 1110 may be integrated together, or are disposed separately.

In a solution, the communication apparatus 1100 is configured to implement an operation performed by the terminal device (the first UE) in the foregoing method embodiments.

For example, the processor 1110 is configured to implement a processing-related operation performed by the terminal device (the first UE) in the foregoing method embodiments, and the transceiver 1130 is configured to implement a receiving and sending-related operation performed by the terminal device (the first UE) in the foregoing method embodiments.

In another solution, the communication apparatus 1100 is configured to implement an operation performed by the network devices (the first access network device and the second access network device) in the foregoing method embodiments.

For example, the processor 1110 is configured to implement a processing-related operation performed by the network devices (the first access network device and the second access network device) in the foregoing method embodiments, and the transceiver 1130 is configured to implement a receiving and sending-related operation performed by the network devices (the first access network device and the second access network device) in the foregoing method embodiments.

It should be understood that the processor 1110 and the memory 1120 may be integrated into one processing apparatus. The processor 1110 is configured to execute program code stored in the memory 1120 to implement the foregoing functions. During specific implementation, the memory 1120 may also be integrated into the processor 1110, or may be independent of the processor 1110. It should be understood that the processor 1110 may alternatively correspond to each processing unit in the foregoing communication apparatus, and the transceiver 1130 may correspond to each receiving unit and each sending unit in the foregoing communication apparatus.

It should be further understood that the transceiver 1130 may include a receiver (or referred to as a receiving machine) and a transmitter (or referred to as a transmitting machine). The transceiver may further include one or more antennas. Alternatively, the transceiver may be a communication interface or an interface circuit.

It should be understood that, specifically, the communication apparatus 1100 may correspond to the terminal device and the network device in the method 600 to the method 900 according to embodiments of this application. The communication apparatus 1100 may include units of the method performed by the terminal device and the network device in the method 500, and units of the method performed by the network device and the terminal device in the method 500. A specific process of performing the foregoing corresponding steps by each module is described in detail in the foregoing method embodiments. For corresponding beneficial effects, refer to the foregoing method embodiments. For brevity, details are not described herein again.

When the communication apparatus is a chip, the chip includes a transceiver unit and a processing unit. The transceiver unit may be an input/output circuit or a communication interface. The processing unit may be a processor, a microprocessor, or an integrated circuit integrated on the chip.

In a possible design, the chip may be, for example, a communication chip that may be used in the apparatus, and is configured to implement a related function of the processor 1110 in the apparatus. The chip apparatus may be a field programmable gate array, a dedicated integrated chip, a system chip, a central processing unit, a network processor, a digital signal processing circuit, a microcontroller, a programmable controller, or another integrated chip for implementing related functions. Optionally, the chip may include one or more memories, configured to store program code. When the code is executed, the processor is enabled to implement a corresponding function.

Optionally, the memory and the processor in the foregoing embodiments may be units that are physically independent of each other, or the memory and the processor may be integrated together.

An embodiment of this application further provides a computer-readable storage medium. The computer-readable storage medium stores a computer program used to perform the method in the foregoing method embodiments. When the computer program is run on a computer, the computer is enabled to perform the method in the foregoing method embodiments.

According to the method provided in embodiments of this application, this application provides a computer program product, including a computer program. When the computer program is run on a computer, the computer is enabled to perform the method in the foregoing method embodiment.

According to the method provided in embodiments of this application, this application further provides a system. The system includes the foregoing one or more terminal devices and the foregoing one or more network devices.

The network device in the foregoing apparatus embodiments completely corresponds to the terminal device and the network device or the terminal device in the method embodiments. Corresponding modules or units perform corresponding steps. For functions of specific units, refer to the corresponding method embodiments.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by first UE, a first message from a first access network device, wherein the first message is used by the first UE to perform RRC reconfiguration, the first message comprises a network coding NC configuration parameter, the NC configuration parameter comprises first indication information, and the first indication information indicates the first UE to perform an NC operation with a second access network device; and
separately performing, by the first UE, NC operations on a first coded packet and a second coded packet based on the first message, wherein the first coded packet is an NC coded packet generated or received by the first access network device, and the second coded packet is an NC coded packet generated or received by the second access network device.

2. The method according to claim 1, wherein the NC configuration parameter comprises second indication information, and the second indication information indicates the second access network device to perform an NC entity reset operation.

3. The method according to claim 1, wherein the separately performing, by the first UE, NC operations on a first coded packet and a second coded packet based on the first message comprises:
establishing, by the first UE based on the NC configuration parameter, a second NC entity associated with the second access network device; and
submitting, by the first UE based on the first indication information, the second coded packet from the second access network device to the second NC entity to perform an NC operation.

4. The method according to any one of claims 1 to 3, wherein the method further comprises:
submitting, by the first UE, the first coded packet from the first access network device to a first NC entity associated with the first access network device to perform an NC operation.

5. The method according to claim 3, wherein the method further comprises:
receiving, by the first UE, third indication information, wherein the third indication information indicates to submit the first coded packet from the second access network device to a first NC entity associated with the first access network device to perform an NC operation, and perform decompression processing by using a security function and/or an IP header associated with the first access network device; or
receiving, by the first UE, fourth indication information, wherein the fourth indication information indicates to submit the second coded packet from the second access network device to the second NC entity associated with the second access network device to perform an NC operation, and perform decompression processing by using a security function and/or an IP header associated with the second access network device.

6. The method according to claim 5, wherein the third indication information and the fourth indication information are an indication field in the first coded packet and an indication field in the second coded packet respectively, and the indication field being the third indication information is different from the indication field being the fourth indication information.

7. A communication method, comprising:
sending, by a first access network device, a first message, wherein the first message indicates first UE to perform RRC reconfiguration, the first message comprises a network coding NC configuration parameter, the NC configuration parameter comprises first indication information, and the first indication information indicates the first UE to perform an NC operation with a second access network device; and
sending, by the first access network device, a first data packet to the second access network device, wherein the first data packet is used by the second access network device to perform an NC operation based on the first indication information to generate a second coded packet.

8. The method according to claim 7, wherein the NC configuration parameter comprises second indication information, and
the second indication information indicates the second access network device to perform an NC entity reset operation.

9. The method according to claim 8, wherein the method further comprises: sending, by the first access network device, a first coded packet to the first UE, wherein the first coded packet is a coded packet generated or received by the first access network device.

10. The method according to claim 8 or 9, wherein the method further comprises: sending, by the first access network device, the first coded packet to the second access network device.

11. The method according to claim 10, wherein the method further comprises:
sending, by the first access network device, third indication information to the second access network device, wherein the third indication information indicates the first UE to submit the first coded packet from the second access network device to a first NC entity associated with the first access network device to perform an NC operation, and perform decompression processing by using a security function and/or an IP header associated with the first access network device; or
sending, by the first access network device, fourth indication information to the second access network device, wherein the fourth indication information indicates to submit the second coded packet from the second access network device to a second NC entity associated with the second access network device to perform an NC operation, and perform decompression processing by using a security function and/or an IP header associated with the second access network device.

12. The method according to claim 11, wherein the third indication information and the fourth indication information are an indication field in the first coded packet and an indication field in the second coded packet respectively, and the indication field being the third indication information is different from the indication field being the fourth indication information.

13. A communication method, comprising:
receiving, by first UE, a first message from a first access network device, wherein the first message is used by the first UE to perform RRC reconfiguration, the first message comprises a coding NC configuration parameter, the NC configuration parameter comprises first indication information, and the first indication information indicates the first UE to perform an NC operation with a second access network device; and
separately performing, by the first UE, NC operations on a first coded packet and a second coded packet based on the first message, submitting the first coded packet to a security function and/or an IP header associated with the first access network device for decompression processing, and submitting the second coded packet to a security function and/or an IP header associated with the second access network device for decompression processing.

14. The method according to claim 13, wherein the method further comprises:
receiving, by the first UE, the first coded packet from the second access network device, comprising:
performing, by the first UE, an NC operation on the first coded packet based on fifth indication information, and then submitting the first coded packet to the security function and/or the IP header associated with the first access network device for decompression processing.

15. The method according to claim 14, wherein the first coded packet is obtained by the second access network device by performing coding based on a first coded data packet and a first coding identifier, wherein the first coding identifier is a coding group number allocated by the first access network device to the first coded data packet, and the first coded data packet is a coded data packet that is submitted by the first access network device to an NC entity and that is sent to the second access network device; or
the first coded packet is a coded packet that is obtained by the first access network device by performing a coding operation and that is sent to the second access network device.

16. The method according to claim 13, wherein the method further comprises:
receiving, by the first UE, the second coded packet from the second access network device, comprising:
performing, by the first LTE, an NC operation on the second coded packet based on sixth indication information, and then submitting the second coded packet to the security function and/or the IP header associated with the second access network device for decompression processing.

17. The method according to claim 16, wherein the second coded packet is obtained by the second access network device by performing NC coding after the second access network device performs IP header compression and/or key encryption, wherein the first coded data packet is a coded data packet sent by the first access network device to the second access network device.

18. The method according to any one of claims 13 to 17, wherein the first coded packet and the second coded packet belong to a same coding group.

19. The method according to any one of claims 13 to 17, wherein the NC configuration parameter comprises second indication information, and the second indication information indicats the second access network device to continue an NC entity operation.

20. A communication method, comprising:
sending, by a first access network device, a first message, wherein the first message is used by first UE to perform RRC reconfiguration, the first message comprises a coding NC configuration parameter, the NC configuration parameter comprises first indication information, and the first indication information indicates the first UE to perform an NC operation with a second access network device; and
sending, by the first access network device, a first coded data packet or a first coded packet to the second access network device, wherein the first coded data packet or the first coded packet is used by the second access network device to perform an NC operation to generate the first coded packet or a second coded packet, and the first coded data packet is a coded data packet submitted by the first access network device to an NC entity.

21. The method according to claim 20, wherein the sending, by the first access network device, a first coded packet to the second access network device comprises:
performing, by the first access network device, an NC operation based on the first coded data packet to generate the first coded packet; and
sending, by the first access network device, the first coded packet to the second access network device.

22. The method according to claim 20, wherein the method further comprises:
sending, by the first access network device, a first coding identifier of the first coded data packet to the second access network device, and the first coding identifier is used by the second access network device to generate the first coded packet based on the first coded data packet, wherein the first coding identifier is a coding group number allocated by the first access network device to the first coded data packet.

23. The method according to claim 21 or 22, wherein the first coded packet comprises fifth indication information, and the fifth indication information indicates the first UE to perform an NC operation on the first coded packet, and then submit the first coded packet to a security function and/or an IP header associated with the first access network device for decompression processing.

24. The method according to claim 20, wherein the second coded packet comprises sixth indication information, and the sixth indication information indicates the first UE to perform an NC operation on the second coded packet, and then submit the second coded packet to a security function and/or an IP header associated with the second access network device for decompression processing.

25. The method according to any one of claims 20 to 24, wherein the first coded packet and the second coded packet belong to a same coding group.

26. The method according to any one of claims 20 to 24, wherein the NC configuration parameter comprises second indication information, and the second indication information comprises indicating the second access network device to continue an NC entity operation.

27. A communication apparatus, comprising a module or a unit for implementing the method according to any one of claims 1 to 26.

28. A communication apparatus, comprising:
a memory, configured to store computer instructions; and
a processor, configured to execute the computer instructions stored in the memory, to enable the apparatus to perform the method according to any one of claims 1 to 26.

29. A computer-readable storage medium, wherein the computer-readable storage medium stores a computer program, and the computer program is configured to perform the method according to any one of claims 1 to 26.

30. A chip system, comprising a processor, wherein the processor is configured to execute a stored computer program, and the computer program is configured to perform the method according to any one of claims 1 to 26.
